Europäisches Patentamt

European Patent Office

Office européen des brevets

(19)

(11) Publication number: **0 336 781**
A2

## (12) EUROPEAN PATENT APPLICATION

(21) Application number: **89303500.6**

(22) Date of filing: **10.04.89**

(51) Int. Cl.4: **B 62 D 27/02**
 **B 62 D 25/00**

(30) Priority: **08.04.88 AU 7725/88**

(43) Date of publication of application:
**11.10.89 Bulletin 89/41**

(84) Designated Contracting States:
**AT BE CH DE ES FR GB GR IT LI LU NL SE**

(71) Applicant: **JRA LIMITED**
**Cnr. Heathcote Road and Church Road**
**Moorebank New South Wales 2170 (AU)**

(72) Inventor: **McDermott, Terry**
**Villa 2, 142 Morts Road**
**Mortdale, N.S.W. 2223 (AU)**

**Menzies, Colin**
**99 Marian Street**
**Enmore, N.S.W. 2042 (AU)**

**Lewis, Brad**
**27 Kemp Street**
**Tennyson, N.S.W. 211 (AU)**

**Iowa, Val**
**114 Eric Street**
**Bundeena, N.S.W. 2230 (AU)**

**Eberl, Lorenz**
**4 Webber Place**
**Kings Langley, N.S.W. 2147 (AU)**

(74) Representative: **Matthews, Graham Farrah et al**
**BROOKES & MARTIN Incorporating MATTHEWS,**
**HADDAN & CO. High Holborn House 52/54, High Holborn**
**London, WC1V 6SE (GB)**

(54) Vehicle frame structure.

(57) A vehicle frame comprises a plurality of continuous pillar members (3) and continuous substancially horizontal rails (5, 6, 7), made of rectangular tubing welded together; said rails and said pillars being connected in an overlapping manner.

Each of said continuous substancially vertical rails extends above the topmost of said continuous substancially horizontal rails. Roof bow members (8) near their free ends are welded in a face-to-face relationship to the portion of the respective continuous vertical rails which extend above the topmost rail, with the free ends of said roof bows welded to the top surface of said topmost continuous substantially horizontal rails.

FIG. 4

Description

# VEHICLE FRAME STRUCTURE

The present invention relates to a vehicle frame construction and a method of assembly.

Existing vehicle frames, and in particular bus frames, are constructed using coplanar joints. It has been found that typical failures in vehicle structures occurred at these coplanar joints.

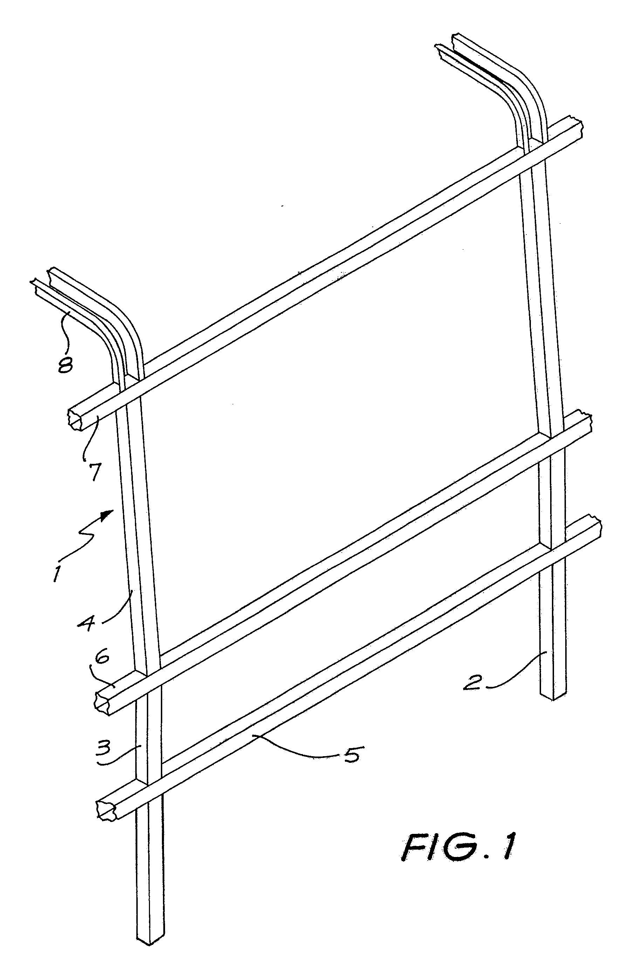

An example of a frame constructed in accordance with a co-planar design is illustrated in figure 1. In this construction the side pillars 1 are constructed of three discrete parts; a skirt portion 2; a central side pillar 3; and a window pillar 4. Interposed between respective parts of the side pillars 1 are the continuous floor rail 5, the continuous waist rail 6 and the continuous cant rail 7 to which is welded the roof bow 8 which is in the form of a flanged open square channel.

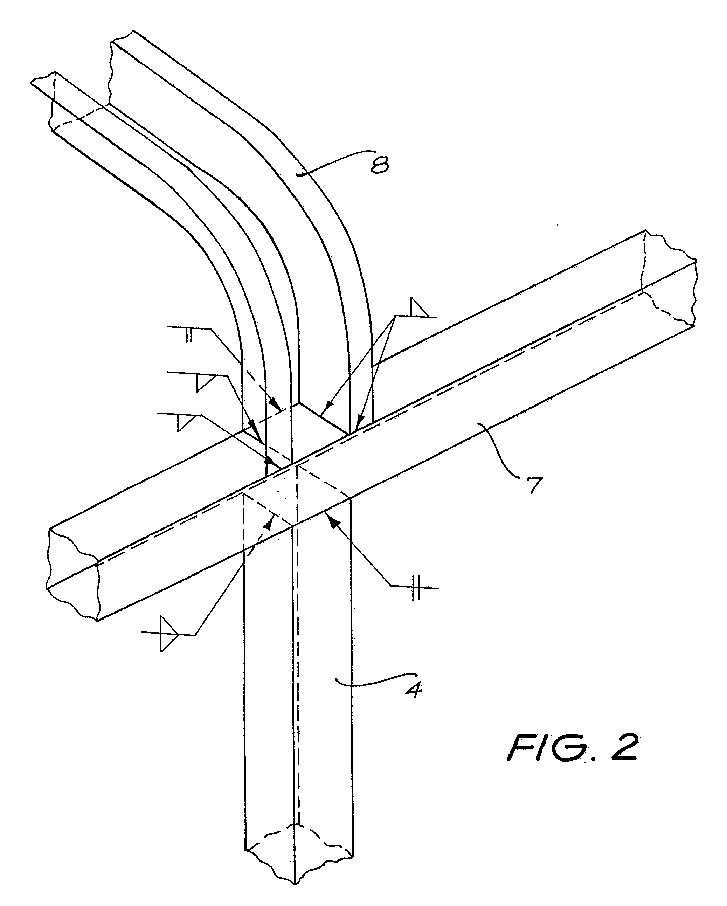

A typical weld detail is shown in figure 2 which illustrates the roof-side frame joint of a structure utilizing coplanar joints. As can be seen, each discrete element requires either fillet or butt welding as required at each of the mating edges. Thus a considerable amount of time is required for welding of the total frame because of the number of discrete parts.

Therefore to ameliorate this disadvantage and to improve joint efficiency by reducing stresses in the joints, the invention, in one broad form, comprises a vehicle frame structure having a plurality of continuous substantially vertical pillar members and continuous substantially horizontal rails, whereby said rails and said pillars are connected in an overlapping manner.

In one embodiment the rails are welded to said pillars. Preferably both the rails and pillars are rectangular tubing.

The invention will so be described by way of example with reference to the accompanying figures in which:

Figure 3 illustrates a view of one bay of a vehicle using an embodiment of the present invention;

Figure 4 illustrates a roof-side frame joint weld detail of the embodiment illustrated in figure 3;

Figure 5 shows a stress distribution diagram for a coplanar joint;

Figure 6 shows a stress distribution diagram for an overlap joint;

Figure 7 illustrates longitudinal loading fatigue tests for a coplanar and overlap joint;

Figure 8 illustrates transverse loading fatigue tests for a coplanar and overlap joint; and

Figure 9 illustrates an energy absorption comparison test for coplanar and overlap construction.

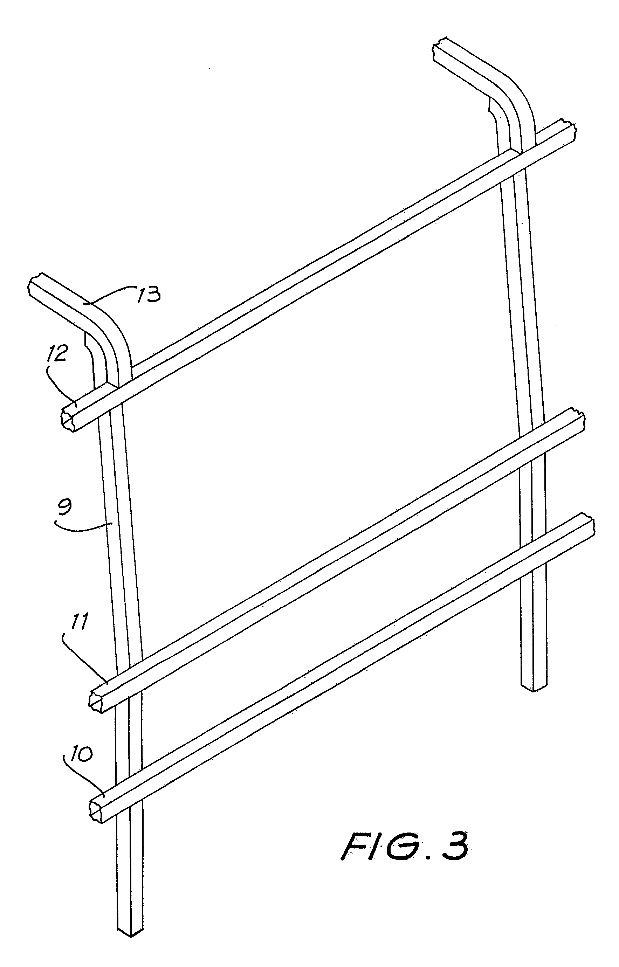

As shown in figure 3 continuous side pillars 9 are used. Connected across them are continuous floor rails 10. continuous waist rails 11 and continuous cant rails 12, in a overlapping formation. The rails are preferably welded to the pillars.

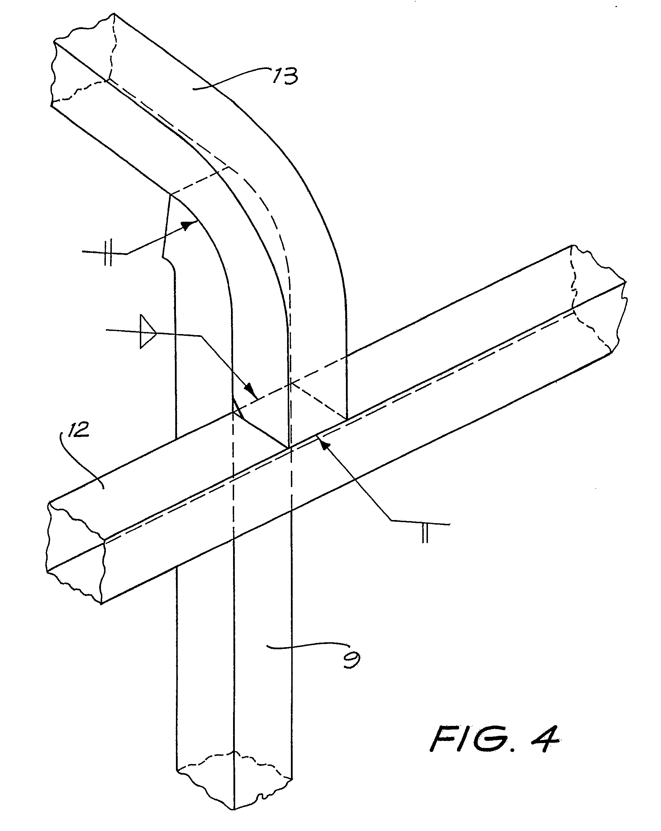

A welding detail is shown in figure 4 whereby the roof bow 13 a hollow rectangular tube is welded to the side pillar 9, extending beyond the continuous cant rail 12 and to the continuous cant rail 12 by appropriate fillet and square welds at the mating edges.

In the present invention optimal use is made of continuous elements; the only regions continuity is not used is because of other considerations, i.e. roof hatches, doorways, dictate that this is not the case. Generally then, the structure comprises virtually full vehicle length roof stringers, full vehicle length cant rails, full vehicle length waist (except for doorways), full vehicle length floor rails, (except for doorways) and full length floor rails to cant rail, side pillars.

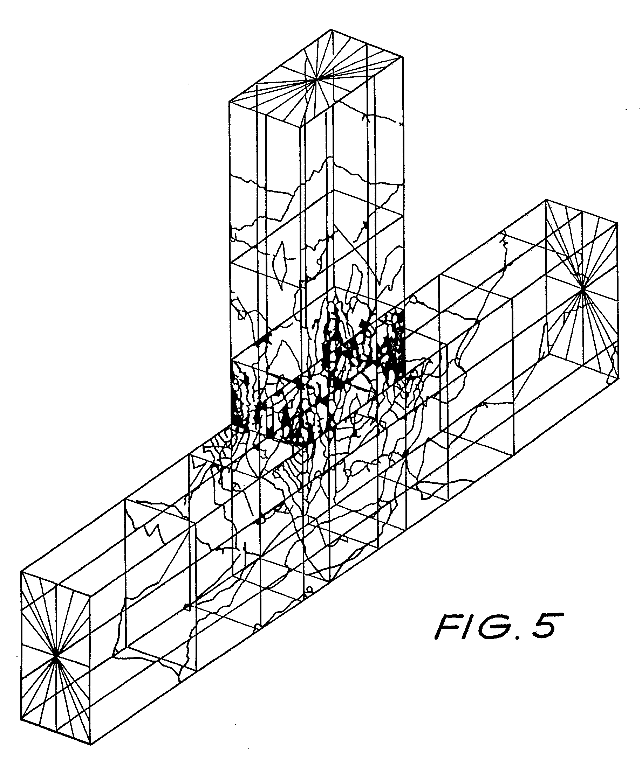

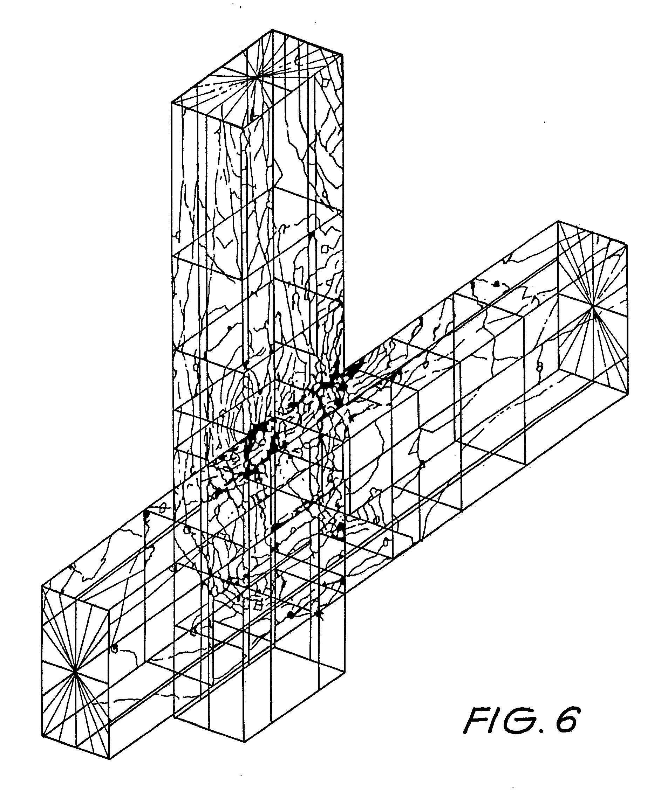

Because of requirements for crashworthiness the roof bow 13, is not continuous with the side pillars. The specific overlap detail as shown in figure 4 helps absorb energy in rollover type deformations and improves fatigue resistance by transmitting loads in shear across the joint as opposed to loads being transmitted as normal forces on a diaphragming area in the case of the prior art coplanar design. Contour stress plots of the coplanar model are shown in figure 5 and for the overlap model are shown in figure 6 showing denser concentration of stresses in the coplanar model. The joints are loaded and restrained in identical methods and the stresses were 27 MPa for the coplanar joint and 22 MPa for the overlap joint, with the coplanar joint having a 22.7% increase in stress compared to the overlap joint for the same size rectangular section.

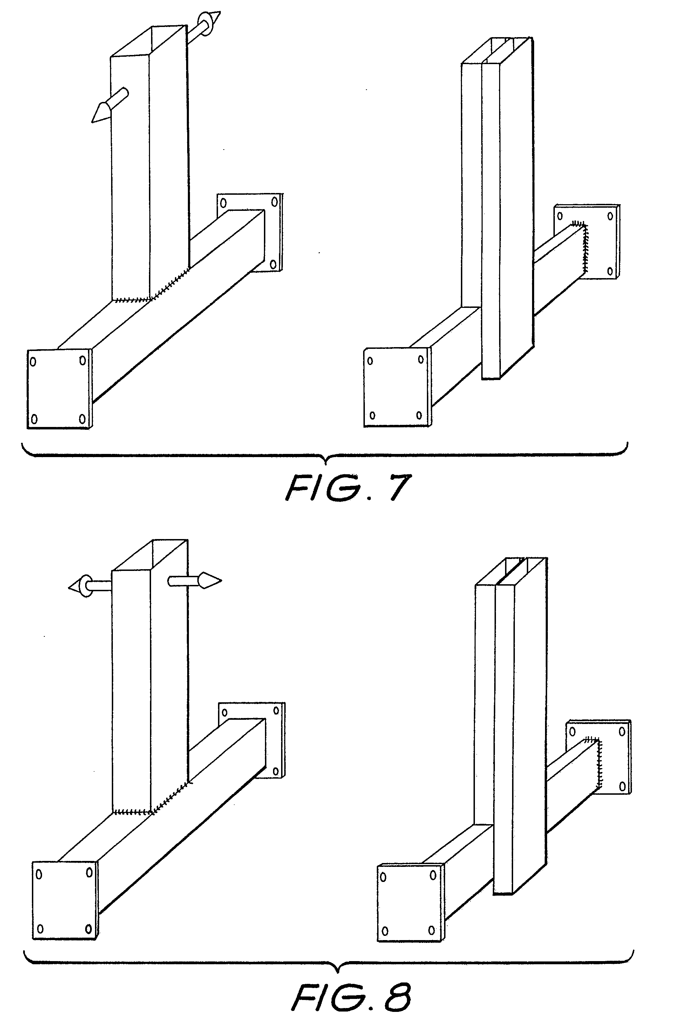

The use of the overlap design provides an improved resistance to fatigue loading as compared to coplanar design. Tests were carried out on the configurations shown in figures 7 and 8, to obtain evaluation of the two designs in longitudinal and transverse loading. As is shown, there is a life increase of more than 14 times for overlap design compared to coplanar design for longitudinal loading and a life increase of more than 4 times for transverse loading.

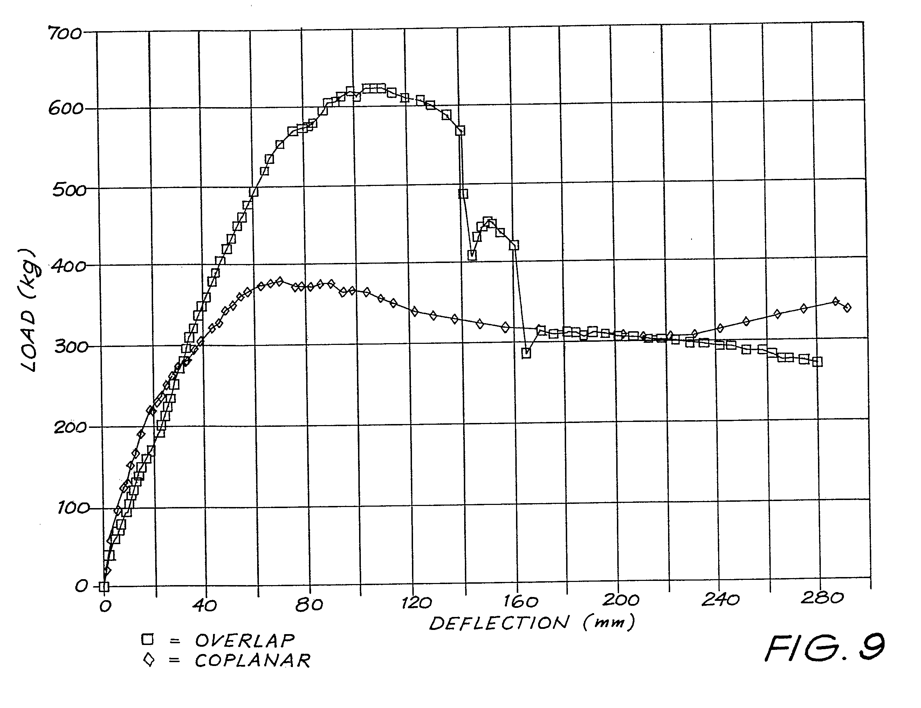

Because of the particular usage of continuous members and roof bow joint construction, embodiments of the present invention show an increase in energy absorption for rollover as compared to conventional designs for vehicles; see figure 9.

Thus because of the reduced number of welds required there is a reduction in construction time of approximately 15% for the construction of the present invention as compared to the traditional coplanar method. Further rectangular tubing of half the cross-section of that of the square tubing of the coplanar method can be used which results in a weight saving in the frame.

In summary then, the following benefits of the lap philosophy over the coplanar philosopy are:

(i) Improved durability of the structure.

(ii) Reduced weight of structure because of fewer components.

(iii) Fewer components with the following atttributes:

(a) the components are less costly,

(b) overall lower assembly time since there are fewer components to manufacture and weld.

(iv) More crashworthy.

## Claims

1. A vehicle frame structure having a plurality of continuous substantially vertical pillar members and continuous substantially horizontal rails, whereby said rails and said pillars are connected in an overlapping manner.

2. A vehicle frame structure according to claim 1 wherein pillar members, and rails are rectangular tubing.

3. A vehicle frame structure according to claim 1 or 2 wherein said pillar members and rails are welded together.

4. A vehicle frame structure according to claim 3 when appended to claim 2 wherein each of said continuous substantially vertical rails extends above the topmost of said continuous substantially horizontal rails, and roof bow members near their free ends are welded in a face-to-face relationship to the portion of the respective continuous vertical rails which extend above the topmost rail, with the free ends of said roof bows being welded to the top surface of said topmost continuous substantially horizontal rails, and wherein continuous roof stringers are welded to the roof bows in overlapping relationship.

FIG.1

FIG. 2

FIG. 3

FIG. 4

FIG. 5

FIG. 6

FIG. 7

FIG. 8

FIG.9

□ = OVERLAP
◇ = COPLANAR

LOAD (kg)

DEFLECTION (mm)